# EUROPÄISCHE PATENTSCHRIFT

(11) **EP 3 946 879 B1**
(45) Veröffentlichungstag und Bekanntmachung des Hinweises auf die Patenterteilung: **13.09.2023**
(21) Anmeldenummer: 20704249.0
(22) Anmeldetag: 06.02.2020
(51) Int. Cl.: B29C 45/14, B29C 45/33

(54) **VERFAHREN ZUM HINTERSPRITZEN VON KALTVERFORMTEN GLASKOMPONENTEN MIT KUNSTSTOFF**
METHOD FOR BACK-MOLDING COLD-SHAPED GLASS COMPONENTS USING PLASTIC
PROCÉDÉ DE CONTRE-INJECTION DE COMPOSANTS DE VERRE DÉFORMÉS À FROID AVEC UNE MATIÈRE PLASTIQUE

(30) Priorität: 01.04.2019 DE 102019204582
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: WACHENSCHWAN, Volker, 38170 Schöppenstedt (DE); SCHÜTZ, Christine, 38108 Braunschweig (DE); DEWALD, Wilma, 38106 Braunschweig (DE)
(86) Internationale Anmeldenummer: PCT/EP2020/052925
(87) Internationale Veröffentlichungsnummer: WO 2020/200548

(56) Entgegenhaltungen:
- EP-A1- 3 338 987
- EP-A1- 3 452 261

## Beschreibung

Die Erfindung betrifft ein Verfahren zum dauerhaften Formen von Glaskomponenten durch mindestens einen Kunststoff.

Um innovative Oberflächen, beispielsweise in einem Innenraum von Fahrzeugen, herzustellen, können dünne Glaskomponenten verwendet werden. Durch derartige Glaskomponenten können dekorative Oberflächen erzeugt werden, in die funktionale Elemente, wie beispielsweise Touch-Sensorik, Beleuchtungselemente und Displays, integriert werden können.

Technisch ist es derzeit möglich, Glaskomponenten heiß zu verformen und in eine dreidimensionale Form zu bringen. Dieser Prozess ist jedoch kostenintensiv, da eine hohe Wärmemenge zum Verformen der Glaskomponente notwendig ist. Diese Glaskomponenten haben jedoch im Fahrzeuginneren den Nachteil, dass sie bei einem Unfall zerbrechen und weitere Maßnahmen zum Schutz der Passagiere getroffen werden müssen.

Alternativ zu dicken Glaskomponenten können dünne Glaskomponenten verwendet werden, welche im kalten Zustand verformbar sind. Derartige dünne Glaskomponenten mit einer Dicke unterhalb von 250 µm weisen eine geringe Wärmekapazität auf und können somit während des Biegeprozesses schnell auskühlen und brechen. Somit sind in erster Linie nur langsame isotherme Biegeverfahren für dünn ausgestaltete Glaskomponenten verwendbar.

Aktuell weisen Displayanwendungen mit Glaskomponenten üblicherweise nur flache Geometrien auf, um die Glaskomponente nicht verformen zu müssen. Für gebogene Geometrien wird dickeres Glas heiß umgeformt und dann mit anderen Werkstoff- und Bauteilkomponenten verklebt. Gläser im Zehntelbereich, sogenanntes Dünnstglas, werden kaltverformt und dann in Rahmen und anderen Vorrichtungen eingespannt, verklebt und verbaut.

Problematisch ist bei den bekannten Verfahren der nacheinander geschaltete Herstellungsprozess. Das Dünnstglas wird meist als letztes auf ein bestehendes Bauteil geklebt, da die Glaskomponente selbst nur eine geringe mechanische Eigenstabilität aufweist.

Bis zum Aushärten des Klebstoffes muss die Glaskomponente in einer Form gehalten werden. Diese Prozesse haben relativ lange Zykluszeiten, wodurch Bauteile mit derartigen Glaskomponenten nicht in größeren Mengen gefertigt werden können.

Aus der EP 3 338 987 A1 ist ein Formwerkzeug zum Formen und Hinterspritzen einer biegbaren Folie mit einer Form bekannt, die eine erste Formhälfte und eine zweite Formhälfte umfasst. Die erste Formhälfte ist gegenüber der zweiten Formhälfte angeordnet und bildet einen Hohlraum zum Halten der biegsamen Folie und zur Aufnahme einer Schmelze. Ferner umfasst die Form mindestens einen Stift zum Halten der biegsamen Folie, und der Stift ist als Reaktion auf eine Kraft, die durch einen Druck der eingespritzten Schmelze während des Hinterspritzens auf den Stift ausgeübt wird, einziehbar.

Aus der EP 3 452 261 A1 ist ein Verfahren zum Hinterspritzen eines gebogenen Glaskörpers bekannt, bei welchem in einem Werkzeug ein Formeinleger mit einer ersten, eben ausgebildeten Seitenfläche und einer gegenüberliegenden zweiten, an eine Kontur des gebogenen Glaskörpers angepassten Seitenfläche derart positioniert wird, dass der Formeinleger mit seiner ersten, eben ausgebildeten Seitenfläche an einer Innenfläche des Werkzeugs anliegt und mit seiner zweiten, an die Kontur des gebogenen Glaskörpers angepassten Seitenfläche frei liegt, wobei der gebogene Glaskörper auf die zweite, an die Kontur des gebogenen Glaskörpers angepasste Seitenfläche aufgelegt wird und der aufgelegte gebogene Glaskörper mit einem fließfähigen Medium hinterspritzt wird.

Der Erfindung liegt die Aufgabe zugrunde, ein Verfahren der eingangs genannten Art zu schaffen, durch welches dünne Glaskomponenten schnell und effizient formbar sind. Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum dauerhaften Formen von Glaskomponenten durch mindestens einen Kunststoff bereitgestellt. In einem Schritt wird mindestens eine unverformte Glaskomponente bereitgestellt und zwischen einem ersten Formwerkzeug und einem zweiten Formwerkzeug positioniert.

Anschließend wird die mindestens eine unverformte Glaskomponente durch Zusammenpressen des ersten Formwerkzeugs und des zweiten Formwerkzeugs elastisch verformt. Die elastische Verformung der Glaskomponente kann vorzugsweise ohne Temperatureintrag bzw. kalt erfolgen.

In einem weiteren Schritt wird die mindestens eine elastisch verformte Glaskomponente durch Arretierungsschieber im verformten Zustand festgehalten. In dem festgehaltenen Zustand wird anschließend ein Kunststoff zumindest bereichsweise auf mindestens eine Seite der verformten Glaskomponente aufgetragen.

Da die verformte Glaskomponente durch die Arretierungsschieber festgehalten wird, kann an diesem Punkt des Verfahrens beispielsweise ein Werkzeugwechsel vorgenommen werden oder weitere Verarbeitungsschritte, wie beispielsweise Reinigung, Vorbehandlung oder Beschichtung, durchgeführt werden. Zum Festhalten der verformten Glaskomponente können mindestens zwei Arretierungsschieber eingesetzt werden, welche die verformte Glaskomponente an mindestens zwei gegenüberliegenden Rändern stützen. Hierdurch kann die Glaskomponente beispielsweise in eine zylindrische Form gepresst und durch zwei randseitig angeordnete Arretierungsschieber in der zylindrische Form gespannt gehalten werden.

Durch das Verfahren können Bauteile mit dünnen Glaskomponenten hergestellt werden, welche ein reduziertes Gewicht und eine einachsige Biegsamkeit aufweisen. Insbesondere können 2.5D Geometrien, wie beispielsweise zylindrische Formen und S- und V-Formen kaltverformt und in einem großserienfähigen Prozess in Form von Bauteilen gefertigt werden.

Anhand des Verfahrens können Glaskomponenten in Formen gespannt bzw. geformt und anschließend mit mindestens einem Kunststoff zumindest bereichsweise hinterspritzt werden. Durch die Applikation und die anschließende Verfestigung des Kunststoffs wird eine Formstabilität des gefertigten Bauteils mit der Glaskomponente gewährleistet. Hierdurch können funktionale Bauteile oder auch dekorative Bauteile, wie beispielsweise Zierelemente, hergestellt werden.

Darüber hinaus ermöglicht das erfindungsgemäße Verfahren eine hohe Abformgenauigkeit sowie eine erhöhte Stabilität bei dem Einbringen der Kunststoffkomponente durch die mechanische Stabilisierung der verformten Glaskomponente durch die Formwerkzeuge. Die Formwerkzeuge und die Arretierungsschieber können hierbei auch großflächigere dünne Glaskomponenten prozesssicher handhaben und somit eine kostenreduzierte Verarbeitung von kaltgebogenen Dünngläsern in Großserie ermöglichen.

Gemäß einem Ausführungsbeispiel wird die mindestens eine unverformte Glaskomponente als ein Dünnstglas bereitgestellt. Der Kunststoff wird gemäß einem weiteren Ausführungsbeispiel durch das erste Formwerkzeug auf die mindestens eine verformte Glaskomponente appliziert, während die mindestens eine verformte Glaskomponente von dem zweiten Formwerkzeug gestützt wird. Hierzu kann das erste Formwerkzeug beispielsweise als ein Spritzguss-Formwerkzeug ausgebildet sein und Ausnehmungen und Formen aufweisen, welche die an der verformten Glaskomponente verfestigte Kunststoffkomponente aufweisen soll. Des Weiteren kann das erste Formwerkzeug entsprechende Leitungen zum Zuführen von einem verflüssigten Kunststoff aufweisen, um die Ausnehmungen und Formen mit dem verflüssigten Kunststoff auszufüllen sowie mit der Glaskomponente zu verbinden.

Hierdurch kann die Kaltverformung der Glaskomponente sowie das Hinterspritzen der verformten Glaskomponente in einem Prozess-Schritt realisiert werden. Diese Ausgestaltung kann beispielsweise bei halbkreisförmigen oder zylindrisch ausgeformten Glaskomponenten eingesetzt werden, wobei der mindestens eine Kunststoff auf einer äußeren Kontur der Glaskomponente aufgebracht werden kann. Die äußere Kontur der verformten Glaskomponente entspricht beispielsweise einer äußeren Mantelfläche.

Bei dieser Ausgestaltung bildet mindestens ein Formwerkzeug eine Kombination aus einem Umformgesenk und einer Spritzgussform.

Die mindestens eine Glaskomponente wird besonders flexibel bearbeitet, wobei nach dem Festhalten der mindestens einen verformten Glaskomponente durch die Arretierungsschieber das zweite Formwerkzeug von der mindestens einen verformten Glaskomponente beabstandet wird und ein drittes Formwerkzeug zum Applizieren des Kunststoffs auf einer dem ersten Formwerkzeug entgegengesetzten Seite der mindestens einen verformten Glaskomponente angeordnet wird. Durch das Festhalten der Glaskomponente mittels der Arretierungsschieber kann die Glaskomponente an dem ersten Formwerkzeug arretiert werden. Hierdurch behält die verformte Glaskomponente ihre elastisch kalt-verformte Form auf dem ersten Formwerkzeug. Dieser arretierte Zustand ermöglicht weitere Bearbeitungsschritte der verformten Glaskomponente, wie beispielsweise Wechsel der Formwerkzeuge, Aufbringen von Beschichtungen, Durchführen von Reinigungsschritten und dergleichen.

Nach einem weiteren Ausführungsbeispiel werden als erstes Formwerkzeug ein Gesenk und als zweites Formwerkzeug ein Stempel zum elastischen Verformen der Glaskomponente eingesetzt. Bevorzugterweise werden das erste Formwerkzeug und/oder das dritte Formwerkzeug mit mindestens einer Appliziereinheit zum Applizieren des Kunststoffs auf die mindestens eine verformte Glaskomponente verbunden. Die Appliziereinheit kann beispielsweise ein direkter Anschluss eines Extruders einer Spritzgussvorrichtung oder eine entsprechende Leitung zum Zuführen von mindestens einem Kunststoff sein. Vorzugsweise können Appliziereinheit und/oder die Zuleitungen zwischen dem Formwerkzeug und der Appliziereinheit beheizbar sein. Das erste und/oder das dritte Formwerkzeug können hierbei ebenfalls beheizbar sein, um ein gleichmäßiges Verteilen des zugeführten Kunststoffs zu ermöglichen.

Die Glaskomponente kann schnell und effizient in dem elastisch verformten Zustand dauerhaft stabilisiert werden, wenn der Kunststoff durch ein Spritzgussverfahren auf die mindestens eine verformte Glaskomponente aufgebracht wird. Durch den Einsatz von einem Spritzgussverfahren kann das Hinterspritzen der Glaskomponente mit Kunststoff automatisiert und beispielsweise in einer Großserienfertigung hergestellt werden. Ein Bauteil, welches aus der mindestens einen verformten Glaskomponente sowie mindestens einem Kunststoff besteht, kann durch das Verfahren besonders schnell und kosteneffizient hergestellt werden.

Die mindestens eine Glaskomponente kann materialschonend kaltverformt werden, wenn das zweite Formwerkzeug elastische Materialeigenschaften aufweist. Beispielsweise kann das zweite Formwerkzeug als ein Stempel mit einer elastischen Kontaktfläche zur Glaskomponente ausgeführt sein. Hierdurch können Spannungsspitzen bei der Verformung der Glaskomponente verhindert werden.

Gemäß einem weiteren Ausführungsbeispiel wird die mindestens eine Glaskomponente zum Verbessern von Haftungseigenschaften vorbehandelt oder beschichtet. Die Glaskomponente kann beispielsweise mit einem Haftvermittler beschichtet werden, um die Haftung des Kunststoffs zu verbessern. Alternativ oder zusätzlich kann die Glaskomponente chemisch angeraut bzw. geätzt werden, um eine optimale Verbindung zum Kunststoff zu erlangen. Bei diesem Schritt können auch dekorative Beschichtungen, wie Farben oder Folien, und/oder funktionale Beschichtungen, wie beispielsweise elektrische Leitungen, aufgebracht werden. Die Beschichtung kann hierbei durch Bedampfen, Sprühen, Siebdruck und dergleichen auf die verformte oder unverformte Glaskomponente aufgebracht werden.

Nach einem weiteren Ausführungsbeispiel wird die mindestens eine verformte Glaskomponente durch mindestens eine Querspannvorrichtung und/oder die Arretierungsschieber in einem verformten Zustand gehalten. Die Arretierungsschieber können beispielsweise dazu eingesetzt werden, geometrisch einfach verformte Glaskomponenten in dem verformten Zustand zu fixieren. Eine derartige Form kann beispielsweise halbkreisförmig oder gebogen sein, bei der die Biegung durch die Arretierungsschieber gehalten wird. Die Arretierungsschieber können hierbei entlang an zumindest zwei gegenüberliegenden Rändern der Glaskomponente angeordnet sein. Bei großflächigen Glaskomponenten und bei komplexen Formen kann der Einsatz von zusätzlichen Querspannvorrichtungen notwendig sein, um die Form der Glaskomponente zu fixieren. Die Querspannvorrichtungen können zumindest abschnittsweise auf die Glaskomponente einwirken. Bevorzugterweise können die Querspannvorrichtungen randseitig an der verformten Glaskomponente in Bereichen zwischen den Arretierungsschiebern formschlüssig positioniert sein. Die Querspannvorrichtungen können beispielsweise entlang einer Biegeachse der verformten Glaskomponente angeordnet sein und die verformte Glaskomponente gegen das erste Formwerkzeug niederhalten. Hierdurch kann die mindestens eine verformte Glaskomponente, welche beispielsweise rechteckig geformt ist, an allen Kanten durch mindestens einen Arretierungsschieber und/oder eine Querspannvorrichtung an dem ersten Formwerkzeug arretiert werden.

Die mindestens eine verformte Glaskomponente kann vollständig bzw. randlos mit mindestens einem Kunststoff verbunden werden, wenn die mindestens eine Querspannvorrichtung und/oder die Arretierungsschieber während eines Biegevorgangs der mindestens einen Glaskomponente nachgeführt oder von der mindestens einen verformten Glaskomponente entfernt werden. Hierdurch können die Querspannvorrichtungen und/oder die Arretierungsschieber während des Spritzgussprozesses zum vollständigen Hinterspritzen der Glaskomponente zurückgezogen werden.

Die Querspannvorrichtungen sowie die Arretierungsschieber können vielseitig angesteuert werden, wenn das Lösen von und/oder das Anlegen an die mindestens eine Glaskomponente der mindestens einen Querspannvorrichtung und/oder der Arretierungsschieber hydraulisch, pneumatisch, elektrisch oder mechanisch durchgeführt wird. Hierdurch können die Querspannvorrichtungen sowie die Arretierungsschieber an bereits bestehende hydraulische, pneumatische oder elektrische Leitungen angeschlossen werden. Es kann mindestens ein Drucksensor zum Erzeugen von Signalen für einen Rückzugsmoment der Querspannvorrichtungen und/oder der Arretierungsschieber eingesetzt werden.

Bei einer alternativen oder zusätzlichen Ausgestaltung kann beispielsweise der Rückzug der Querspannvorrichtungen und/oder der Arretierungsschieber über eine sich ausbreitende Fließfront erfolgen. Dabei kann die Fließfront bzw. der sich ausbreitende Kunststoff die Querspannvorrichtungen sowie die Arretierungsschieber in ihren Endanschlag verdrängen.

Abhängig von der Anwendung können die Querspannvorrichtungen und/oder die Arretierungsschieber auch durch ein Positionieren des zweiten Formwerkzeugs oder des dritten Formwerkzeugs an der vorgeformten Glaskomponente zurückgezogen werden. Hierbei kann die zusätzliche Arretierung der verformten Glaskomponente entfallen, da die Form der Glaskomponente durch die beidseitig angeordneten Formwerkzeuge gewährleistet wird. Hierbei kann das Entfernen der Querspannvorrichtungen und/oder der Arretierungsschieber von der Glaskomponente durch einen Drucksensor eingeleitet werden, welcher einen vordefinierten Anpressdruck der Formwerkzeuge auf die Glaskomponente detektiert. Durch das Entfernen der Querspannvorrichtungen und/oder der Arretierungsschieber kann ein komplettes Hinterspritzen oder Umspritzen der kaltverformten Glaskomponente ermöglicht werden. Bei dem Hinterspritzen der Glaskomponente wird zumindest eine flächige Seite der verformten Glaskomponente wenigstens bereichsweise durch den Kunststoff bedeckt. Bei einem Umspritzen der verformten Glaskomponente wird der mindestens eine Kunststoff auch randseitig an der verformten Glaskomponente aufgebracht, wobei der Kunststoff auch beidseitig auf die verformte Glaskomponente aufgebracht werden kann.

Gemäß einem weiteren Aspekt der Erfindung wird ein durch das Verfahren hergestelltes Bauteil bereitgestellt. Das Bauteil weist mindestens eine verformte Glaskomponente und mindestens einen Kunststoff auf, welcher zumindest bereichsweise mit der verformten Glaskomponente verbunden ist. Dabei folgt der Kunststoff der nicht eben ausgestalteten Formgebung der verformten Glaskomponente und stabilisiert die Glaskomponente in der jeweiligen Form.

Hierdurch können funktionale oder dekorative Bauteile hergestellt werden, welche beispielsweise für Displays im Fahrzeuginnenraum, hinterleuchtete Elemente im Fahrzeugaußenbereich, B-Säulen, Laserscanner, Sensoren, dekorative Class-A-Oberflächen und dergleichen verwendbar sind. Das Verfahren ist jedoch nicht auf Fahrzeugbau beschränkt, sondern kann auch in anderen technischen Gebieten, wie beispielsweise bei der Herstellung von weißen Waren, Schalterabdeckungen, Elektronikgeräten, Infotainment und dergleichen eingesetzt werden.

Nachfolgend werden Ausführungsbeispiele der Erfindung anhand der Zeichnungen naher erläutert. Es zeigen:
- Fig. 1: eine schematische Darstellung einer Anordnung zum Verformen einer Glaskomponente,
- Fig. 2a und 2b: schematische Darstellungen der Anordnung zum Durchführen eines Verfahrens gemäß einer ersten Ausführungsform,
- Fig. 3a und 3b: schematische Darstellungen einer weiteren Anordnung zum Durchführen eines Verfahrens gemäß einer zweiten Ausführungsform,
- Fig. 4: eine perspektivische Darstellung eines ersten Formwerkzeugs gemäß einer ersten Ausführungsform, und
- Fig. 5: eine perspektivische Darstellung des ersten Formwerkzeugs gemäß einer zweiten Ausführungsform.

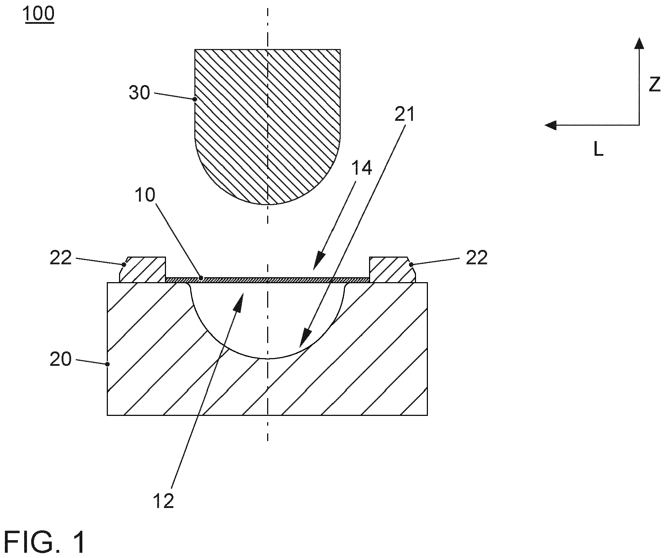

In den Figuren weisen dieselben konstruktiven Elemente jeweils dieselben Bezugsziffern auf. In der Fig. 1 ist eine schematische Darstellung einer Anordnung 100 zum Verformen einer Glaskomponente 10 gezeigt. Die Anordnung 100 weist ein erstes Formwerkzeug 20 und ein zweites Formwerkzeug 30 auf.

Das erste Formwerkzeug 20 ist als ein sogenanntes Gesenk ausgeführt, welches eine halbkreisförmige Kavität 21 aufweist. In einer Längsrichtung L seitlich der Kavität 21 sind Arretierungsschieber 22 angeordnet.

Die Arretierungsschieber 22 sind in Längsrichtung L beweglich ausgeführt. Die Arretierungsschieber 22 können beispielsweise hydraulisch, elektrisch oder pneumatisch betätigt werden. Insbesondere können die Arretierungsschieber 22 in Richtung der Kavität 21 bewegt werden.

Die zu verformende Glaskomponente 10 ist zwischen den Arretierungsschiebern 22 angeordnet. Hierbei können die Arretierungsschieber 22 zusätzlich als Positionierungshilfen zum korrekten Ausrichten der Glaskomponente 10 relativ zur Kavität 21 verwendet werden.

Das zweite Formwerkzeug 30 ist als ein Stempel ausgestaltet. Gemäß dem Ausführungsbeispiel ist das zweite Formwerkzeug 30 als ein elastischer Stempel ausgeführt, welcher in Höhenrichtung Z verfahrbar ist. Das zweite Formwerkzeug 30 weist eine Form auf, welche formschlüssig in die Kavität 21 mit einer Glaskomponente 10 einsetzbar ist.

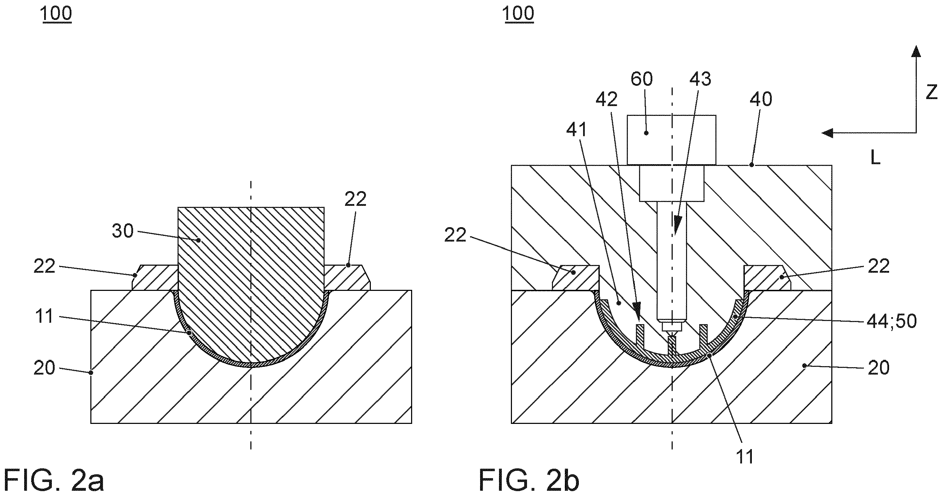

Die Fig. 2a und die Fig. 2b zeigen schematische Darstellungen der Anordnung 100 zum Durchführen eines erfindungsgemäßen Verfahrens gemäß einer ersten Ausführungsform. In der Fig. 2a ist die Anordnung 100 aus der Fig. 1 dargestellt, bei der das zweite Formwerkzeug 30 in die Kavität 21 gepresst wurde.

Nachdem das zweite Formwerkzeug 30 in die Kavität 21 hineingepresst wurde, erfolgt ein Anordnen der Arretierungsschieber 22 in Längsrichtung L gegen das zweite Formwerkzeug 30. Hierdurch überlappen die Arretierungsschieber 22 die zwischen dem ersten Formwerkzeug 20 und dem zweiten Formwerkzeug 30 kalt verformte Glaskomponente 11 und verhindern ein Entformen der verformten Glaskomponente 11. Optimalerweise folgen die Arretierungsschieber 22 während des Biegevorgangs der unverformten Glaskomponente 10 durch das zweite Formwerkzeug 30 der Kontur der Glaskomponente 10.

In einem weiteren Schritt des Verfahrens wird das erste Formwerkzeug 20 mit der durch die Arretierungsschieber 22 fixierten verformten Glaskomponente 11 an ein drittes Formwerkzeug 40 verfahren, welches in der Fig. 2b gezeigt ist. Dies kann beispielsweise durch einen nicht dargestellten Drehteller erfolgen, auf welchem das erste Formwerkzeug 20 positioniert sein kann.

Das dritte Formwerkzeug 40 ist als ein Spritzguss-Werkzeug ausgestaltet und weist einen Stempel 41 mit weiteren Kavitäten 42 auf. Die Kavitäten 42 bilden hierbei eine Form einer zu gießenden Kunststoffkomponente 50 aus. Das dritte Formwerkzeug 40 ist gegen die verformte Glaskomponente 11 gepresst dargestellt. Die Kavität 42 bildet ein Volumen 44 aus, welches durch die verformte Glaskomponente 11 begrenzt ist.

Über eine Kunststoffzufuhr 43 kann ein verflüssigter Kunststoff in die Kavität 42 geleitet werden. Die Kunststoffzufuhr 43 ist beispielsweise mit einem Extruder einer Spritzgussvorrichtung als Appliziereinheit 60 verbunden. Der verflüssigte Kunststoff wird in das Volumen 44 geleitet und kann in dem Volumen 44 zu einer Kunststoffkomponente 50 aushärten, welche zumindest bereichsweise mit der verformten Glaskomponente 11 verbunden ist.

Als Kunststoff können gefüllte oder ungefüllte Duroplaste oder Thermoplaste, Elastomere und dergleichen eingesetzt werden. Auch kann der Kunststoff im thermoplastischen Schaumspritzguss in das Volumen 44 appliziert werden. Dabei kann der Kunststoff chemisch oder physikalisch geschäumt werden.

Die Haftung zwischen der verformten Glaskomponente 11 und der Kunststoffkomponente 50 kann über haftungsoptimierte Beschichtungen, Aktivierung der Glasoberfläche der verformten Glaskomponente 11 oder über einen Haftvermittler erzeugt werden. Des Weiteren kann eine verformte Glaskomponente 11 zum Einsatz kommen, die bereits beschichtet ist oder beispielsweise mit einem Siebdruck versehen ist. Zum Schutz der verformten Glaskomponente 11 bzw. einer Beschichtungen kann auf der zum Spritzguss abgewandten Seite 12 eine Schutzfolie auf die Glaskomponente 10 angeordnet werden. Der Kunststoff 50 wird auf eine dem Kunststoff 50 zugewandte Seite 14 der Glaskomponente 10, 11 appliziert.

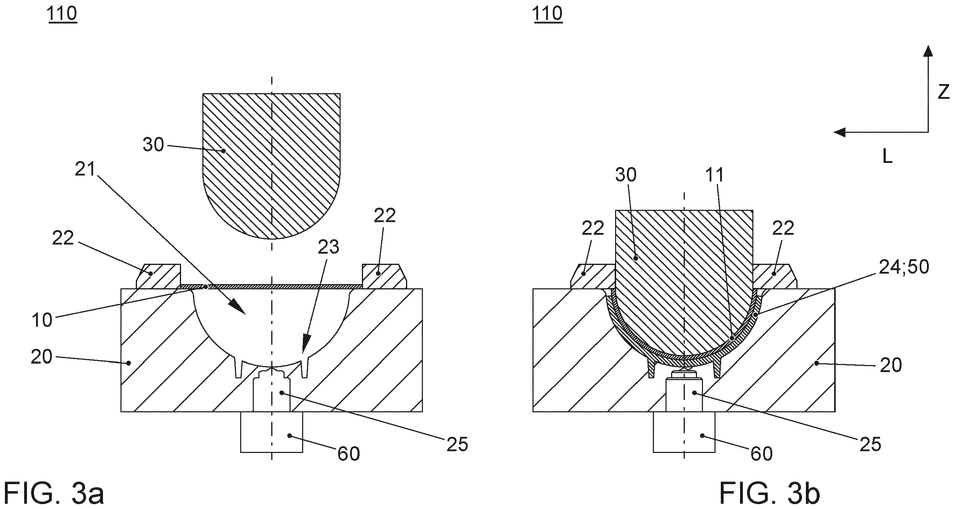

In der Fig. 3a und der Fig. 3b sind schematische Darstellungen einer weiteren Anordnung 110 zum Durchführen eines Verfahrens gemäß einer zweiten Ausführungsform dargestellt. Im Unterschied zur bereits dargestellten Anordnung 100 erfolgt hier die Verformung der Glaskomponente 10 sowie das Einbringen des Kunststoffs in einem Schritt bzw. ohne ein Wechseln der Formwerkzeuge 30, 40.

Gemäß dem Ausführungsbeispiel weist das erste Formwerkzeug 20 neben einer Kavität 21 zum Formen der Glaskomponente 10 eine weitere Kavität 23 zum Ausbilden der Kunststoffkomponente 50 auf. Die beiden Kavitäten 21, 23 gehen nahtlos ineinander über. Das zweite Formwerkzeug 30 wird hierbei derart in Höhenrichtung Z verfahren, dass die Glaskomponente 10 verformt und ein Volumen 24 zum Ausbilden der Kunststoffkomponente 50 zwischen der Kavität 23 und der verformten Glaskomponente 11 eingestellt wird.

Die Fig. 3b zeigt einen Schritt des Verfahrens, bei dem das zweite Formwerkzeug 30 in die Kavität 21 des ersten Formwerkzeugs 20 eingesetzt und der Kunststoff in das Volumen 24 zum Ausbilden der Kunststoffkomponente 50 appliziert wurde. Analog zum dritten Formwerkzeug 40 weist das erste Formwerkzeug 20 gemäß dem Ausführungsbeispiel eine Kunststoffzufuhr 25. Die Kunststoffzufuhr 25 ist mit einer Appliziereinheit 60 verbunden, welche einen verflüssigten Kunststoff über die Kunststoffzufuhr 25 in das Volumen 24 einleiten kann.

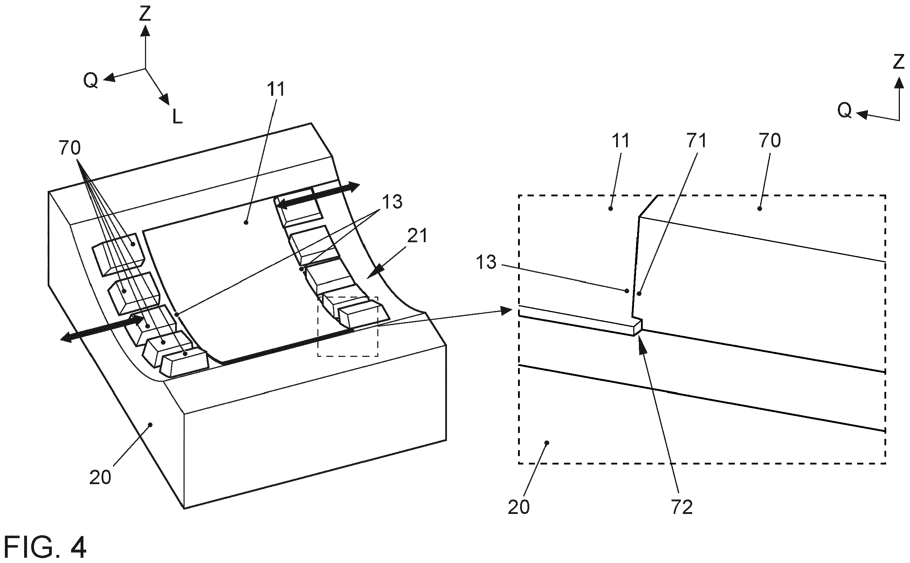

In der Fig. 4 ist eine perspektivische Darstellung des ersten Formwerkzeugs 20 gemäß einer Ausführungsform veranschaulicht. Dabei ist die Glaskomponente 11 in einem verformten Zustand in der Kavität 21 des ersten Formwerkzeugs 20 angeordnet. Die verformte Glaskomponente 11 wird durch Querschiebevorrichtungen 70 im verformten Zustand fixiert.

Insbesondere bei niedrigen Biegeradien müssen die Arretierungsschieber 22 exakt mit dem Rand der Glaskomponente abschließen, da diese sonst aus der Kavität 21 springen kann. Dabei nimmt die Kraft auf einen Rand bzw. Kante 13 der verformten Glaskomponente 11 zu. Hier können die Querspannvorrichtungen 70 entlang der Ränder 13 zum Niederhalten der verformten Glaskomponente 11 eingesetzt werden. Durch die Querspannvorrichtungen 70 kann die verformte Glaskomponente 11 gleichmäßig und materialschonend fixiert werden. Gemäß dem Ausführungsbeispiel sind jeweils fünf Querspannvorrichtungen 70 in Querrichtung Q an den Rändern 13 der verformten Glaskomponente 11 positionierbar. Die Querspannvorrichtungen 70 können in Querrichtung Q bewegt werden. Die Pfeile veranschaulichen die Bewegungsmöglichkeiten der Querspannvorrichtungen 70.

Damit die Querspannvorrichtungen 70 die verformte Glaskomponente 11 optimal arretieren können, weisen sie einen Überstand 71 auf, welcher zur verformten Glaskomponente 11 gerichtet ist. Der Überstand 71 der Querspannvorrichtungen 70 bildet Führungsschlitze 72 aus, in den die verformte Glaskomponente 11 angeordnet ist. Jeder Führungsschlitz 72 wird zwischen dem ersten Formwerkzeug 20 und dem jeweiligen Überstand 71 ausgebildet.

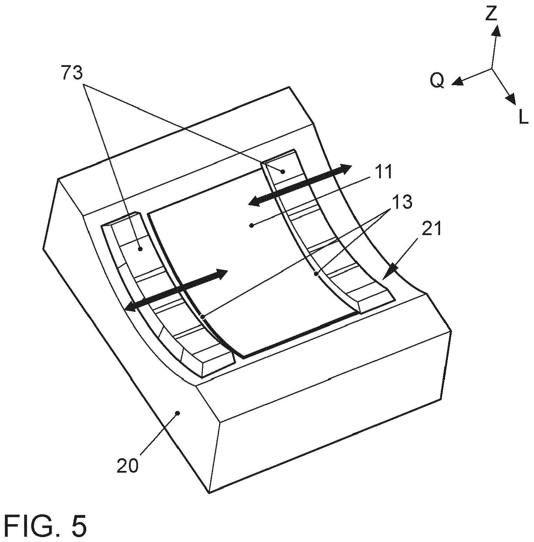

Die Fig. 5 zeigt eine perspektivische Darstellung des ersten Formwerkzeugs 20 gemäß einer zweiten Ausführungsform. Im Unterschied zur in Fig. 4 dargestellten Ausführungsform sind die Querspannvorrichtungen 73 einteilig ausgeführt und erstrecken sich im Wesentlichen entlang der gesamten Ausdehnung der verformten Glaskomponente 11 in Längsrichtung L.

### Bezugszeichenliste

- 10: Glaskomponente / unverformte Glaskomponente
- 11: kalt verformte Glaskomponente
- 12: dem Kunststoff abgewandte Seite der Glaskomponente
- 13: In Querrichtung angeordnete Ränder der Glaskomponente
- 14: dem Kunststoff zugewandte Seite der Glaskomponente

- 20: erstes Formwerkzeug
- 21: Kavität des ersten Formwerkzeugs
- 22: Arretierungsschieber
- 23: Kavität des ersten Formwerkzeugs
- 24: Volumen zwischen Kavität und der Glaskomponente
- 25: Kunststoffzufuhr

- 30: zweites Formwerkzeug

- 40: drittes Formwerkzeug
- 41: Stempel des dritten Formwerkzeugs
- 42: Kavität des dritten Formwerkzeugs
- 43: Kunststoffzufuhr
- 44: Volumen zwischen Kavität und der Glaskomponente

- 50: Kunststoff / Kunststoffkomponente

- 60: Appliziereinheit

- 70: Querspannvorrichtung
- 71: Überstand
- 72: Führungsschlitz
- 73: verlängerte Querspannvorrichtung

- 100: Anordnung gemäß einem ersten Ausführungsbeispiel
- 110: Anordnung gemäß einem zweiten Ausführungsbeispiel

- L: Längsrichtung
- Q: Querrichtung
- Z: Höhenrichtung

## Patentansprüche

1. Verfahren zum dauerhaften Formen von Glaskomponenten (10) durch mindestens einen Kunststoff (50), wobei
- mindestens eine unverformte Glaskomponente (10) zwischen einem ersten Formwerkzeug (20) und einem zweiten Formwerkzeug (30) positioniert wird,
- die mindestens eine unverformte Glaskomponente (10) durch Zusammenpressen des ersten Formwerkzeugs (20) und des zweiten Formwerkzeugs (30) elastisch verformt wird,
- die mindestens eine elastisch verformte Glaskomponente (11) durch Arretierungsschieber (22) im verformten Zustand festgehalten wird und ein Kunststoff (50) zumindest bereichsweise auf mindestens eine Seite (14) der verformten Glaskomponente (11) aufgetragen wird, **dadurch gekennzeichnet, dass** nach dem Festhalten der mindestens einen verformten Glaskomponente (11) durch die Arretierungsschieber (22) das zweite Formwerkzeug (30) von der mindestens einen verformten Glaskomponente (11) beabstandet wird und ein drittes Formwerkzeug (40) zum Applizieren des Kunststoffs (50) auf einer dem ersten Formwerkzeug (20) entgegengesetzten Seite (14) der mindestens einen verformten Glaskomponente (11) angeordnet wird.

2. Verfahren nach Anspruch 1, wobei die mindestens eine unverformte Glaskomponente (10) als ein Dünnstglas bereitgestellt wird, wobei der Kunststoff (50) durch das erste Formwerkzeug (20) auf die mindestens eine verformte Glaskomponente (11) appliziert wird, während die mindestens eine verformte Glaskomponente (11) von dem zweiten Formwerkzeug (30) gestützt wird.

3. Verfahren nach einem der Ansprüche 1 bis 2, wobei als erstes Formwerkzeug (20) ein Gesenk und als zweites Formwerkzeug (30) ein Stempel zum elastischen Verformen der Glaskomponente (10) eingesetzt werden, wobei das erste Formwerkzeug (20) und/oder das dritte Formwerkzeug (40) mit mindestens einer Appliziereinheit (60) zum Applizieren des Kunststoffs (50) auf die mindestens eine verformte Glaskomponente (11) verbunden werden.

4. Verfahren nach einem der Ansprüche 1 bis 3, wobei der Kunststoff (50) durch ein Spritzgussverfahren auf die mindestens eine verformte Glaskomponente (11) aufgebracht wird.

5. Verfahren nach einem der Ansprüche 1 bis 4, wobei das zweite Formwerkzeug (30) elastische Materialeigenschaften aufweist.

6. Verfahren nach einem der Ansprüche 1 bis 5, wobei die mindestens eine Glaskomponente (10) zum Verbessern von Haftungseigenschaften vorbehandelt oder beschichtet wird.

7. Verfahren nach einem der Ansprüche 1 bis 6, wobei die mindestens eine verformte Glaskomponente (11) durch mindestens eine Querspannvorrichtung (70, 73) und/oder die Arretierungsschieber (22) in einem verformten Zustand gehalten wird.

8. Verfahren nach Anspruch 7, wobei die mindestens eine Querspannvorrichtung (70, 73) und/oder die Arretierungsschieber (22) während eines Biegevorgangs der mindestens einen Glaskomponente (10) nachgeführt oder von der mindestens einen Glaskomponente (10) entfernt werden.

9. Verfahren nach Anspruch 7 oder 8, wobei das Lösen von und/oder das Anlegen an die mindestens eine Glaskomponente (10) der mindestens einen Querspannvorrichtung (70, 73) und/oder der Arretierungsschieber (22) hydraulisch, pneumatisch, elektrisch oder mechanisch durchgeführt wird.

## Claims

1. Method for permanently molding glass components (10) using at least one plastics material (50),
- at least one unshaped glass component (10) being positioned between a first molding tool (20) and a second molding tool (30),
- the at least one unshaped glass component (10) being elastically deformed by pressing the first molding tool (20) and the second molding tool (30) together,
- the at least one elastically deformed glass component (11) being held in the deformed state by locking slides (22) and a plastics material (50) being deposited, at least in regions, on at least one side (14) of the deformed glass component (11), **characterized in that**, after the at least one deformed glass component (11) is held by the locking slides (22), the second molding tool (30) is spaced apart from the at least one deformed glass component (11) and a third molding tool (40) is arranged on a side (14) of the at least one deformed glass component (11) opposite the first molding tool (20) in order to apply the plastics material (50).

2. Method according to claim 1, wherein the at least one unshaped glass component (10) is provided as an ultra-thin glass, wherein the plastics material (50) is applied by the first molding tool (20) to the at least one deformed glass component (11), while the at least one deformed glass component (11) is supported by the second molding tool (30).

3. Method according to either claim 1 or claim 2, wherein a die is used as the first molding tool (20) and a punch is used as the second molding tool (30) to elastically deform the glass component (10), wherein the first molding tool (20) and/or the third molding tool (40) are connected to at least one application unit (60) for applying the plastics material (50) to the at least one deformed glass component (11).

4. Method according to any of claims 1 to 3, wherein the plastics material (50) is deposited on the at least one deformed glass component (11) by an injection molding method.

5. Method according to any of claims 1 to 4, wherein the second molding tool (30) has elastic material properties.

6. Method according to any of claims 1 to 5, wherein the at least one glass component (10) is pre-treated or coated in order to improve adhesion properties.

7. Method according to any of claims 1 to 6, wherein the at least one deformed glass component (11) is held in a deformed state by at least one transverse clamping device (70, 73) and/or the locking slides (22).

8. Method according to claim 7, wherein the at least one transverse clamping device (70, 73) and/or the locking slides (22) are adjusted during a bending process of the at least one glass component (10) or are removed from the at least one glass component (10).

9. Method according to either claim 7 or claim 8, wherein the at least one glass component (10) is released from or placed against the at least one transverse clamping device (70, 73) and/or the locking slides (22) hydraulically, pneumatically, electrically or mechanically.

## Revendications

1. Procédé permettant le formage durable de composants en verre (10) par au moins une matière plastique (50),
- au moins un composant en verre (10) non déformé étant positionné entre un premier outil de formage (20) et un deuxième outil de formage (30),
- l'au moins un composant en verre (10) non déformé étant déformé élastiquement par la pression l'un contre l'autre du premier outil de formage (20) et du deuxième outil de formage (30),
- l'au moins un composant en verre déformé élastiquement (11) étant maintenu dans l'état déformé par des coulisseaux de blocage (22) et une matière plastique (50) étant appliquée, au moins dans certaines régions, sur au moins un côté (14) du composant en verre déformé (11), **caractérisé en ce que**, après le maintien de l'au moins un composant en verre déformé (11) par les coulisseaux de blocage (22), le deuxième outil de formage (30) est espacé de l'au moins un composant en verre déformé (11) et un troisième outil de formage (40) pour l'application de la matière plastique (50) est disposé sur un côté (14) de l'au moins un composant en verre déformé (11) opposé au premier outil de formage (20).

2. Procédé selon la revendication 1, l'au moins un composant en verre (10) non déformé étant fourni sous la forme d'un verre mince, la matière plastique (50) étant appliquée par le premier outil de formage (20) sur l'au moins un composant en verre déformé (11), pendant que l'au moins un composant en verre déformé (11) est soutenu par le deuxième outil de formage (30).

3. Procédé selon l'une des revendications 1 à 2, une matrice étant utilisée comme premier outil de formage (20) et un poinçon étant utilisé comme deuxième outil de formage (30) pour la déformation élastique du composant en verre (10), le premier outil de formage (20) et/ou le troisième outil de formage (40) étant reliés à au moins une unité d'application (60) pour l'application de la matière plastique (50) sur l'au moins un composant en verre déformé (11).

4. Procédé selon l'une des revendications 1 à 3, la matière plastique (50) étant appliquée par un procédé de moulage par injection sur l'au moins un composant en verre déformé (11).

5. Procédé selon l'une des revendications 1 à 4, le deuxième outil de formage (30) présentant des propriétés de matériau élastiques.

6. Procédé selon l'une des revendications 1 à 5, l'au moins un composant en verre (10) étant prétraité ou revêtu pour l'amélioration de propriétés d'adhésion.

7. Procédé selon l'une des revendications 1 à 6, l'au moins un composant en verre déformé (11) étant maintenu dans un état déformé par au moins un dispositif de serrage transversal (70, 73) et/ou les coulisseaux de blocage (22).

8. Procédé selon la revendication 7, l'au moins un dispositif de serrage transversal (70, 73) et/ou les coulisseaux de blocage (22) étant déplacés à la suite de l'au moins un composant en verre (10) ou étant éloignés de celui-ci lors d'un processus de pliage de l'au moins un composant en verre (10).

9. Procédé selon la revendication 7 ou 8, le détachement de l'au moins un dispositif de serrage transversal (70, 73) et/ou des coulisseaux de blocage (22) de l'au moins un composant en verre (10) et/ou leur appui sur celui-ci étant effectués de manière hydraulique, pneumatique, électrique ou mécanique.
